Europäisches Patentamt

European Patent Office

Office européen des brevets

(11) Veröffentlichungsnummer: **0 215 293**
A2

# (12) EUROPÄISCHE PATENTANMELDUNG

(21) Anmeldenummer: 86111152.4

(51) Int. Cl.⁴: **B60T 1/10** , B60T 17/22

(22) Anmeldetag: 12.08.86

(30) Priorität: 18.09.85 DE 3533242

(43) Veröffentlichungstag der Anmeldung:
25.03.87 Patentblatt 87/13

(84) Benannte Vertragsstaaten:
AT BE CH DE FR GB IT LI NL SE

(71) Anmelder: M A N Nutzfahrzeuge GmbH
Dachauer Strasse 667 Postfach 50 06 20
D-8000 München 50(DE)

(72) Erfinder: Hörmann, Rudolf
Am Speckfeld 15
D-8060 Dachau(DE)

(54) Fahrzeug mit Druckgasenergiespeichern.

(57) Die Erfindung betrifft ein Fahrzeug, insbesondere Hydrobus, mit einer oder mehreren Hydraulikeinheiten (Pumpe-Motor), mit mindestens einem Hochdruck-Gasenergiespeicher und mindestens einem Niederdruck-Gasenergiespeicher sowie mit einer oder mehreren Speisepumpen. Den Speichern (3, 4) ist ein den Füllgrad-Sollwert des Niederdruckspeichers (4) regulierendes Kontroll-und Steuersystem, das eine Solldruckkurve oder Druckgrenzwerte überwacht und eine entsprechende Auffüllung der Speicher durch Ein-bzw. Ausschaltung der Speisepumpen gewährleistet, zugeordnet. Die Kontroll-Steuereinheit weist einen dem Niederdruckspeicher - (4) vorgeschalteten Druckwächter (5) auf, der mit einer den Solldruck vorgebenden Elektronik-Einheit - (7) verbunden ist. Die Kontroll-und Steuereinrichtung kann auch aus einem Druckwächter und einem zusätzlichem Öltemperaturfühler bestehen.

EP 0 215 293 A2

## Fahrzeug mit Druckgasenergiespeichern

Die Erfindung betrifft ein Fahrzeug, insbesondere einen Hydrobus, mit einem oder mehreren Hydroeinheiten (Motor-Pumpe), mit mindestens einem Hochdruck-Gasenergiespeicher und mindestens einem Niederdruck-Gasenergiespeicher sowie mit einer oder mehreren Speisepumpen.

Eine systemspezifische Energierückgewinnung bei vorbeschriebener Anordnung ist bekannt. Es wird hierbei beim Bremsen Öl aus dem Niederdruckspeicher abgesaugt und über die Hydroeinheit dem Hochdruckspeicher zugeführt. Das Wiederauffüllen des Niederdruckspeichers geschieht über einen Zusatztank, der unter der Getriebeölwanne angebracht ist und der infolge geringer Bodenfreiheit durch Bordsteine und holpriges Gelände leicht beschädigt werden kann. Indikator für das Nachfüllen des Niederdruckspeichers ist eine im Tank angebrachte Niveausensorik, wobei bei zu hohem Ölstand die Speisepumpen zugeschaltet werden und über Wegeventile der Niederdruckspeicher beaufschlagt wird. Diese Lösung weist gleich mehrere Nachteile auf: Die schon vorher erwähnte Beschädigungsgefahr für den Tank, die damit noch wahrscheinlichere Beschädigungsgefahr für die empfindliche Niveausensorik, mehr Bauaufwand, eine erforderliche zusätzliche Ölmenge und nicht zuletzt eine erhebliche Funktionsunsicherheit des Systems bei Kurvenfahrt oder hohen Temperaturen.

Der Erfindung liegt die Aufgabe zugrunde, eine Einrichtung zu schaffen, die die vorgenannten Nachteile vermeidet und mit wenig Aufwand ein bedarfgerechtes, immer funktionsfähiges Auffüllen des Niederdruckspeichers gewährleistet.

Das wird erfindungsgemäß dadurch gelöst, daß den Speichern ein den Füllgrad-Sollwert des Niederdruckspeichers regulierendes Kontroll-und Steuersystem zugeordnet ist, wobei der eventuell angezeigte Ölfehlbedarf aus der Ölwanne des Getriebes oder der im drucklosen Bereich angeordneten Leitungen des Ölkreislaufes entnehmbar und über die Speisepumpe(n) dem Niederdruckspeicher zur sollmäßigen Auffüllung zuführbar ist. Diese Anordnung macht einen Zusatztank überflüssig und damit auch eine Ölniveausensorik im Tank. Die neue Einrichtung ist nicht mehr ungenau bei Kurvenfahrten, und demzufolge ist das ganze Hydrauliksystem zuverlässiger.

Nach einem ins Detail gehenden Merkmal der Erfindung weist die Kontrolleinheit einen dem Niederdruckspeicher vorgeschalteten Druckwächter auf, der mit einer den Solldruck vorgebenden Elektronik-Einheit (Computer) verbunden ist. Somit wird der Füllstand des Niederdruckspeichers druckabhängig geregelt, d. h., wenn der Druck einen engen Sollwertbereich unterschreitet, werden die den Speisepumpen zugehörigen Wegeventile geschaltet und der Niederdruckspeicher wird nachgefüllt. Der Druckschalter ist vorzugsweise direkt vor dem Niederdruckspeicher angeordnet.

Nach einem weiterführenden Merkmal der Erfindung weist die Kontroll-und Steuereinheit einen dem Niederdruckspeicher vorgeschalteten Druckwächter und einen gleichfalls vorgeschalteten Temperaturfühler auf, wobei die Werte, in Abhängigkeit voneinander, mit einer in der Elektronikeinheit gespeicherten Sollkurve abgleichbar sind. Indem der Parameter Temperatur im erfindungsgemäßen Kontroll-und Steuersystem zusätzlich eingeführt wird, vollzieht sich die Nachfüllung, nach den bekannten Formeln

$$\frac{P1}{P2} = \frac{V2}{V1}^{K} \quad bzw. \quad \frac{T1}{T2} = \frac{P1}{P2}^{\frac{K-1}{K}}$$

noch präzieser, und es wird auch bei hohen Temperaturen eine gute Annäherung bzw. Erfüllung der im Rechenspeicher vorgegebenen Kurven unter Berücksichtigung der K-Änderung erzielt.

Das System ist nach einem anderen erfinderischen Aspekt dahingehend erweiterbar, daß die dem Niederdruckspeicher zugeordneten Druckwächter und Temperaturfühler mit einem weiteren dem Hochdruckspeicher vorgeschalteten Druckwächter in Redundanz koppelbar sind. Hierdurch wird in vorteilhafter Weise das System noch betriebssicherer gemacht, indem drei Werte mit der Sollkurve abgeglichen werden.

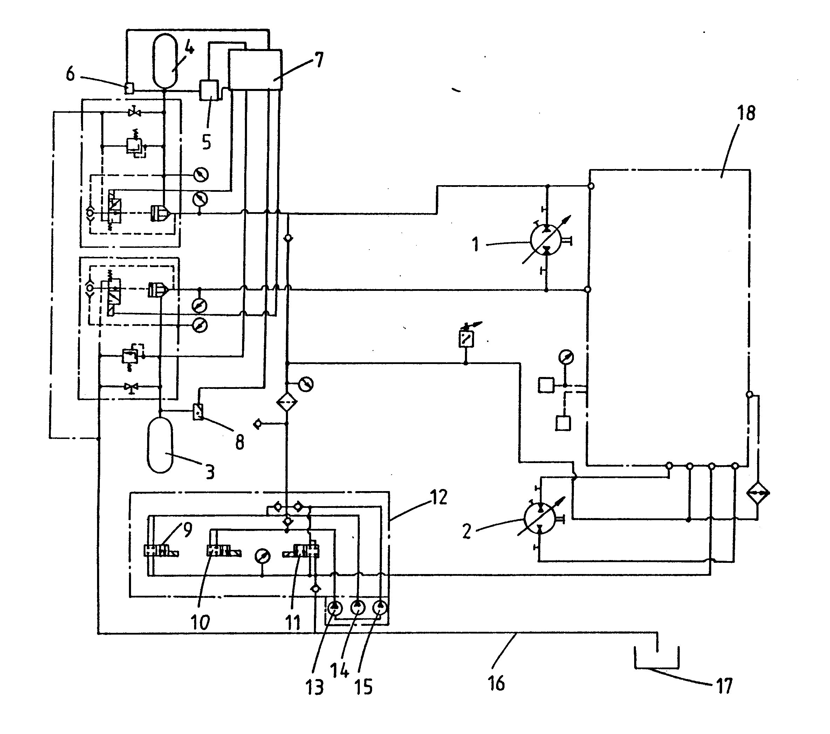

Weitere Vorteile und Merkmale der Erfindung sind den Ansprüchen, der Zeichnung und der Beschreibung zu entnehmen.

Die Erfindung ist in einem Ausführungsbeispiel dargestellt.

Die einzige Figur zeigt einen Hydraulikschaltplan, der in Einzelheiten auch andere Alternativen zuläßt.

In der nachfolgenden Beschreibung werden nur die erfindungsrelevanten Teile mit Bezugszeichen versehen und erklärt.

Der Hydraulikplan zeigt die Hydroeinheiten - (Pumpe-Motor) 1 und 2, zusammengeschaltet mit einem Steuerblock 18. Diese Einheiten sind über diverse Leitungen und Steuer-und Regelelemente mit dem Hochdruckspeicher 3 und dem Niederdruckspeicher 4 verbunden. Dem Niederdruckspeicher sind der Druckwächter 5 und der Temperaturfühler 6 zugeordnet, die über entsprechende elektrische Leitungen mit der Elektronikeinheit - (Computer) 7 verbunden sind, wo die von ihnen registrierten Werte mit Sollwerten oder mit einer Sollkurve abgeglichen werden. Ein weiterer Druckwächter 8 ist dem Hochdruckspeicher 3 zugeordnet und ebenfalls mit der Elektronikeinheit verbunden. Hierdurch wird ein höherwertiges redundantes System erzeugt. Wenn die Abweichungen von den Sollwerten, die auch als Druckgrenzwerte aufgefaßt werden können, oder der Sollkurve unzulässig groß werden, schaltet die Elektronikeinheit auf die Wegeventile 9, 10, 11 des Servoblockes 12, wodurch die Pumpen 13, 14, 15, den Niederdruckspeicher 4 nachfüllend, beaufschlagt werden. Über Ansaugleitung 16 wird Öl aus der Getriebeölwanne 17 den Pumpen zugeführt. Der Druckwertverlauf in Abhängigkeit von den Fahrzeugzuständen ist in nachfolgender Tabelle angezeigt:

## Druck

| Fahrzeug Zustand | H.D Speicher | | N.D. Speicher | |
|---|---|---|---|---|
| Stillstand | Maximal | [X] | Minimal | [X] |
| Beschleunigen | (P ↘) | [o] | (P ↗) | [o] |
| Konstante Geschwindigkeit | Minimal | [X] | Maximal | [X] |
| Bremsung | (P ↗) | [o] | (P ↘) | [o] |

[X] Anwendbare Grenzwerte
[o] Anwendbare Sollwertkurven

In das Getriebe wird bei Motorleerlauf die ganze Ölmenge eingegossen, der Niederdruckspeicher bleibt geöffnet bis der eingestellte Druck erreicht wird, die normale Funktion beginnt nach der ersten Nutzbremsung.

Bezugszeichenliste

1 Hydroeinheit
2 Hydroeinheit
3 Hochdruckspeicher
4 Niederdruckspeicher
5 Druckwächter
6 Temperaturfühler
7 Elektronikeinheit (Computer)
8 Druckwächter
9 Wegeventil
10 Wegeventil
11 Wegeventil
12 Servoblock
13 Pumpe
14 Pumpe
15 Pumpe
16 Ansaugleitung
17 Getriebeölwanne
18 Steuerblock

Ansprüche

1. Fahrzeug, insbesondere Hydrobus, mit einer oder mehreren Hydraulikeinheiten, (Motor-Pumpe), mit mindestens einem Hochdruck-Gasenergiespeicher und mindestens einem Niederdruck-Gasenergiespeicher sowie mit einer oder mehreren Speisepumpen, dadurch gekennzeichnet, daß den Speichern (3, 4) ein den Füllgrad-Sollwert des Niederdruckspeichers (4) regulierendes Kontroll-und Steuersystem zugeordnet ist, wobei der eventuell angezeigte Ölfehlbedarf aus der Ölwanne (17) des Getriebes oder der im drucklosen Bereich angeordneten Leitungen des Ölkreislaufes entnehmbar und über die Speisepumpe(n) (13, 14, 15) dem Niederdruckspeicher (4) zur sollmäßigen Auffüllung zuführbar ist.

2. Fahrzeug nach Anspruch 1, dadurch gekennzeichnet, daß die Kontroll-und Steuereinheit einen dem Niederdruckspeicher (4) vorgeschalteten Druckwächter (5) aufweist, der mit einer den Solldruck vorgebenden Elektronik-Einheit (7) verbunden ist.

3. Fahrzeug nach Anspruch 1 oder 2, dadurch gekennzeichnet, daß die Kontroll-und Steuereinheit einen dem Niederdruckspeicher (4) vorgeschalteten Druckwächter (5) und einen Öltemperaturfühler (6) aufweist und die von ihnen erfaßten Werte, in Abhängigkeit voneinander, mit einer in der Elektronikeinheit (7) abgespeicherten Sollkurve abgleichbar sind.

4. Fahrzeug nach den Ansprüchen 1 bis 3, dadurch gekennzeichnet, daß die dem Niederdruckspeicher (4) zugeordneten Druckwächter (5) und Temperaturfühler (6) mit einem weiteren, dem Hochdruckspeicher (3) vorgeschalteten Druckwächter (8) in Redundanz koppelbar sind.

5. Fahrzeug nach einem oder mehreren der Ansprüche 1 bis 4, dadurch gekennzeichnet, daß den Speisepumpen (13, 14, 15) Wegeventile (9, 10, 11) zugeordnet sind, die bei Auffüllbedarf des Niederdruckspeichers (4) schaltbar sind.

6. Fahrzeug nach einem oder mehreren der Ansprüche 1 bis 5, dadurch gekennzeichnet, daß die vom Kontrollsystem, bestehend aus Druckwächtern (5, 8) und Temperaturfühler (6), erfaßten Werte mit in der Elektronik-Einheit (7) vorgegebenen Sollwerten, also mit einem maximal zulässigen Wert für das Abschalten und einem minimal zulässigen Wert für das Einschalten der Speisepumpen (13, 14, 15), abgleichbar sind.